# EUROPEAN PATENT APPLICATION

(11) **EP 1 215 580 A2**
(43) Date of publication of application: **19.06.2002**
(21) Application number: 01309181.4
(22) Date of filing: 30.10.2001
(51) Int. Cl.: G06F 12/02, H04M 1/247

(54) **Memory recovering management for deleted items in a communication unit terminal**

(30) Priority: 15.12.2000 GB 0030692
(71) Applicant: Nokia Corporation, 02150 Espoo (FI)
(72) Inventor: Oestergaard, Christian, 2100 Copenhagen (DK); Kraft, Christian, 2650 Hvidovre (DK); Yliranta, Piia, 90580 Oulu (FI)
(74) Representative: Hibbert, Juliet Jane Grace

(57) **Abstract**

A communication unit with a recovering management terminal for handling deleted items, and having means to recover and re-install deleted items in their original location. In communications units there has long been a need for better handling of deleted items as well as easier procedures for deleting items. With the claimed invention a user of a communication unit will easily delete items of any kind without the need for numerous confirmations to make certain the user really wants to delete the selected item. If the user should unintentionally delete an item or later regrets a deletion he/she can with the claimed recovering management terminal recover and re-install the item in its original location.

## Description

The invention relates to a communication unit having features for recovering deleted items in the communication unit. The recovering feature includes an electronic trash-can. The electronic trash-can will also be called recovery management terminal in the patent application.

In mobile phones a deleted item cannot be recovered after having being deleted. The deletion of items is, as anyone knows something that many times goes too fast and many times also unintentionally. A press on a button and something is gone forever. In mobile phones known today there is no way back. It is known from mail systems to have a folder with deleted items that can be recovered. The aim with this invention is to propose a trash-can for mobile phones, where the user of the mobile phone has the possibility to review the deleted items in the trash-can and to recover them if wanted. Due to the fact that mobile phones have a rather limited memory capacity it is necessary to provide the trash-can with some restrictions to facilitate the use of the phone.

The claimed invention provides a mobile phone with a possibility for the user to recover deleted items of all kinds and to return the deleted item to its original location. Its also provides a mobile phone with a recovering function that can be defined by the user in its recovering time, order of deletion, operation etc.

An object of the invention is to provide a communication unit with recovering means so that a user of the communication unit can recover deleted items, whether they are intentionally deleted or unintentionally deleted.

According to a first preferred embodiment of the claimed invention this objective is obtained by a recovery management terminal for handling deleted items in a communication unit, where the recovery management terminal includes: representing means for displaying the deleted items in a hierarchical memory structure including additional information about said deleted item, recovering means to recover said deleted item from the hierarchical memory structure of deleted items and to relocate the link to said deleted item to its original location before deletion from the memory position in which the deleted item is stored, recovering means for establishing a link from the memory position in which the deleted item is stored to a new location, and user interface means for enabling manipulation of the deleted items menu.

Another objective of the claimed invention is to provide a method for recovering intentionally or unintentionally deleted items in a communication unit.

According to the claimed invention this objective is obtained by a method for handling deleted items being represented in a recovery management terminal in a hierarchical memory structure and including the steps of: representing the name of said deleted items in said memory structure, where the representation includes additional information about said deleted item, recover said deleted item from the hierarchical memory structure of deleted items and to relocate said deleted item to its original location before being deleted and dislocated to the hierarchical memory structure in the recovery management terminal, saving said deleted item to a new location, and user interface options for emptying said hierarchical memory structure and enabling manipulation of the deleted items menu.

The invention will be explained more fully below, by way of example, in connection with preferred embodiments and with reference to the drawing, in which:
Figure 1-3 shows in a perspective view the preferred embodiments of the communication unit according to the invention.
Figure 4 schematically shows the essential parts of a telephone for communication with a cellular network.
Figure 5 an idle mode display for a communication unit with one soft-key.
Figure 6a-6f shows a flow chart of the deleted items function according to the invention.
Figure 7 shows different windows of the display in the deleted items function according to the invention, where the communication unit has one soft-key.
Figure 8 shows different windows of the display in the deleted items function according to the invention, where the communication unit has one soft-key.
Figure 9 shows different windows of the display in the deleted items function according to the invention, where the communication unit has two or three soft-keys.
Figure 10 shows different windows of the display in the deleted items function according to the invention, where the communication unit has two or three soft-keys.
Figure 11 an idle mode display for a communication unit with two or three soft-keys.

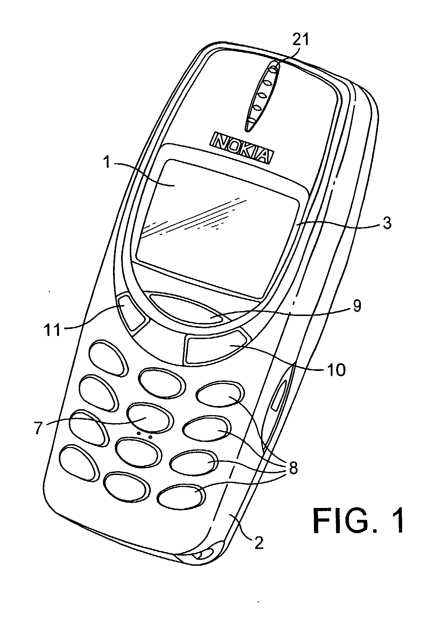

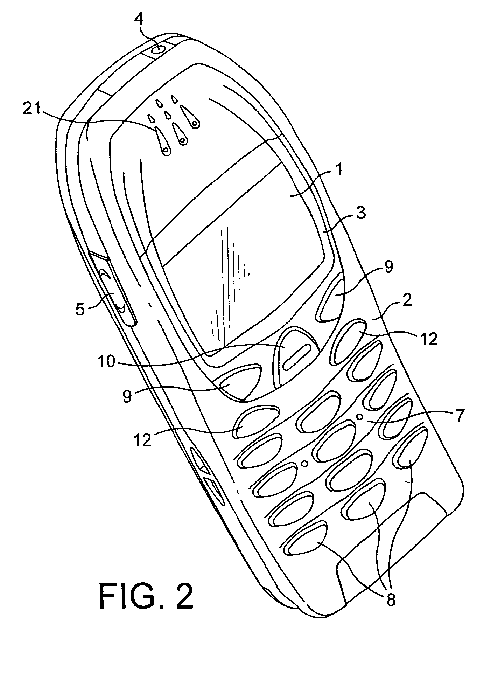

According to a first aspect the recovering management terminal according to the invention will be described with reference to a hand portable phone, preferably a cellular/mobile phone. A preferred embodiment of this phone is shown in figure 1, 2 and 3, where a cellular/mobile phone is shown in perspective. As will be seen, the phone is provided with a front cover 2 having a window frame 3 encircling the protection window of the display assembly 1. The cellular/mobile phone comprises a user interface having an on/off button 4 (shown in figure 2), a keypad 7, a battery 14 (not shown), a display/LCD 1, an earpiece 21 and a microphone 22 (not shown).

The keypad 7 has a first group of keys 8 as alphanumeric keys, by means of which the user can enter a telephone number, write a text message (SMS), write a name (associated with the phone number), etc. Each of the twelve alphanumeric keys 8 is provided with a figure "0-9" or a sign "#" or "*", respectively. In alpha mode each key is associated with a number of letters and special signs used in the text editing.

The keypad 7 additionally comprises a menu selection key 9, a up/down key 10, and a cancel key 11. The functionality of the menu selection key or NaviKey™ 9 depends on the state of the phone. The NaviKey™ 9 is used together with the up/down key 10, where the selection/navigation is made by the NaviKey™ 9 and the scrolling in the menus are made by the up/down key 10. The functionality of the NaviKey™ 9 changes depending on the menus and its present functionality is shown in a separate field in the display 1 just above the NaviKey™ 9. The cancel key 11 is used for delete an input, or cancel the current selection and jump to previous menu level.

The menu selection key 9 is placed centrally on the front surface of the phone between the display 1 and the group of alphanumeric keys 8. Hereby the user will be able to control this key 9 with his thumb. This is the best site to place an input key requiring precise motor movements. Many experienced phone users are used to one-hand handling. They place the phone in the hand between the fingertips and the palm of the hand. Hereby the thumb is free for inputting information.

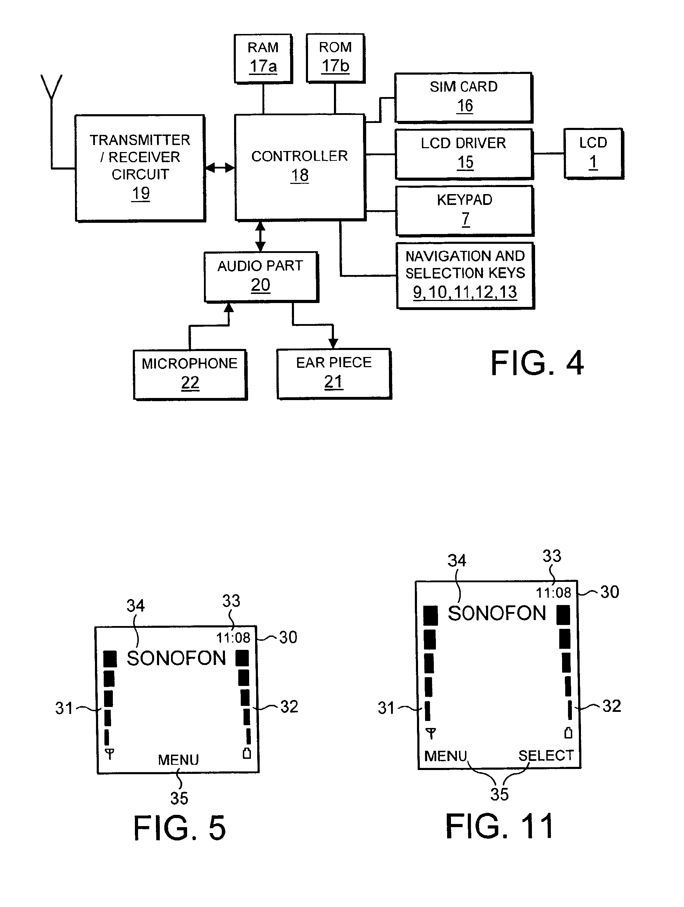

Figure 4 schematically shows the most important parts of a preferred embodiment of the phone/terminal, said parts being essential to the understanding of the invention. The microphone 22 records the user's speech, and the analogue signals formed thereby are A/D converted in an A/D converter (not shown) before the speech is encoded in an audio part 20. The encoded speech signal is transferred to the controller 18 (physical layer processor), which e.g. supports GSM terminal software. The controller 18 also forms the interface to the peripheral units of the apparatus, including RAM and ROM memories 17a and 17b, a SIM card 16, the display 1 and the keypad 7 (from figure 1) as well as data, power supply, etc. The controller 18 communicates with the transmitter/receiver circuit 19. The audio part 20 speech-decodes the signal, which is transferred from the controller 18 to the earpiece 21 via a D/A converter (not shown).

The preferred embodiment of the phone of the invention is adapted for use in connection with a GSM network, but, of course, the invention may also be applied in connection with any phone network. It could be cellular networks, various forms of cordless phone systems or in multiple-band phones accessing sets of these systems/networks.

The controller 18 is connected to the user interface of the mobile phone. Thus, it is the controller 18, which monitors the activity in the phone and controls the display 1 in response thereto.

Therefore, it is the controller 18, which detects the occurrence of a state change event and changes the state of the phone and thus the display text. The user may cause a state change event, when he/she activates the keypad 7 including the menu selection key or keys 9, and these type of events are called entry events or user events. However, the network communicating with the phone may also cause a state change event. These type of events and other events beyond the user's control are called non-user events. Non-user events comprise status change during call set-up, change in battery voltage, change in antenna conditions, message on reception of SMS, etc.

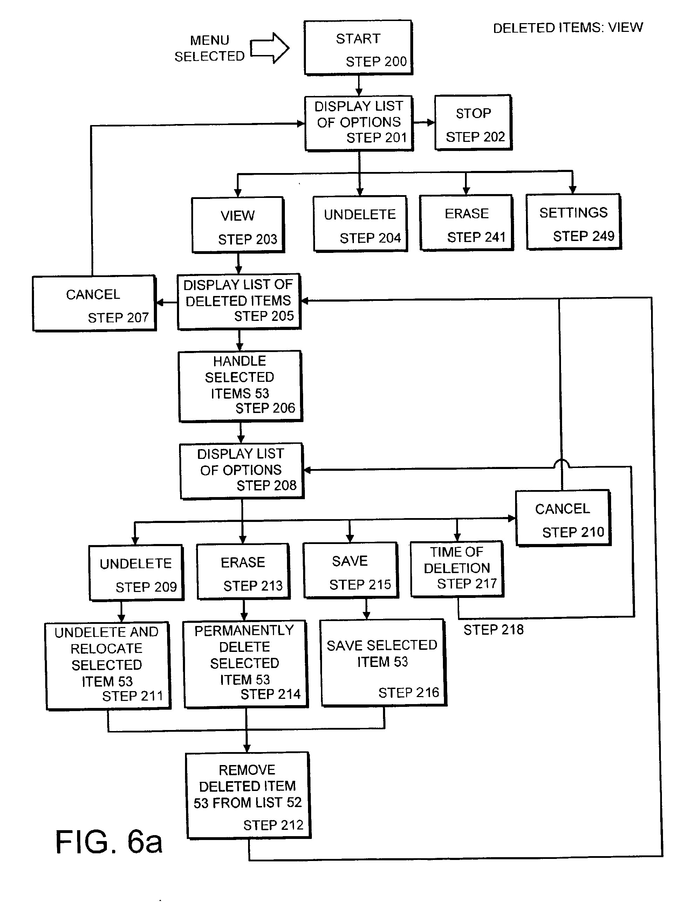

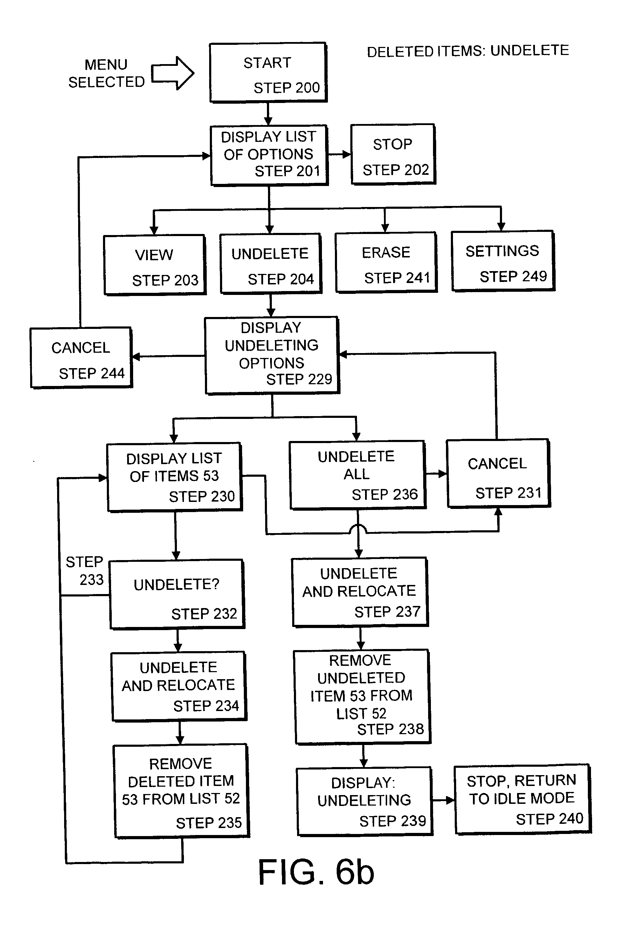

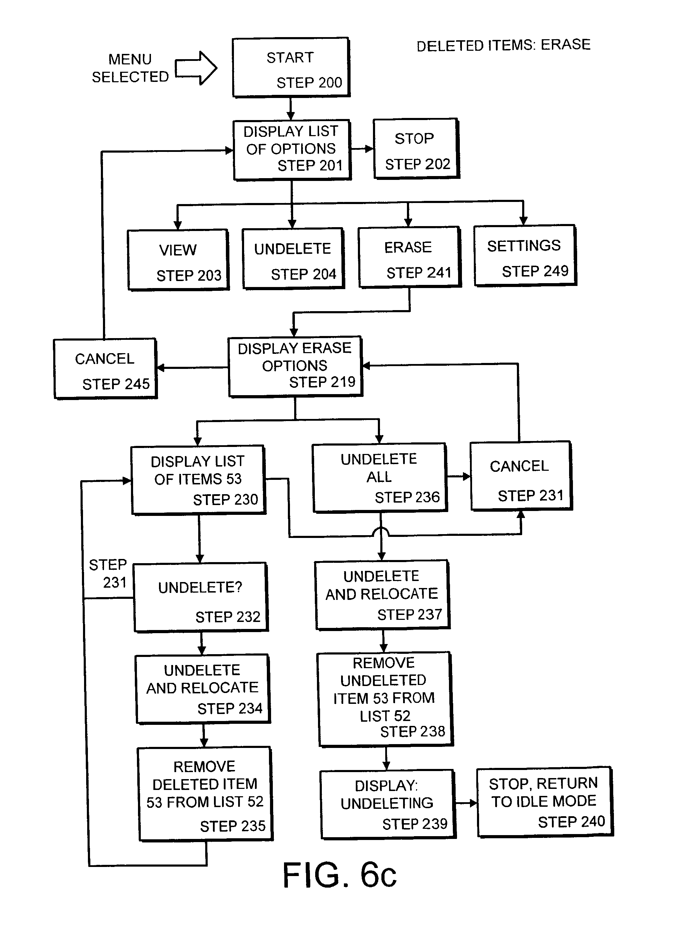

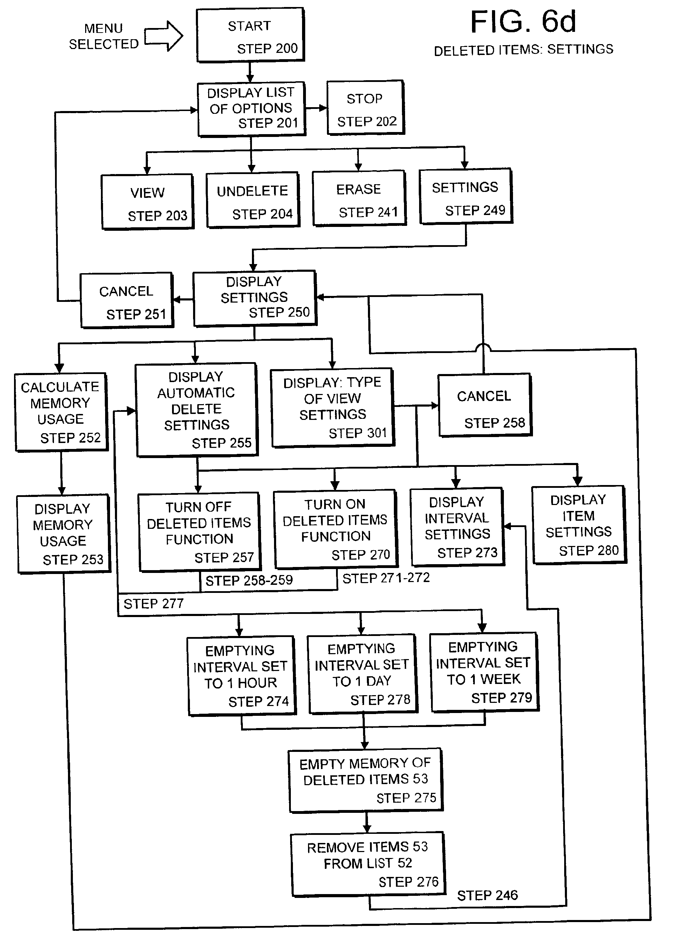

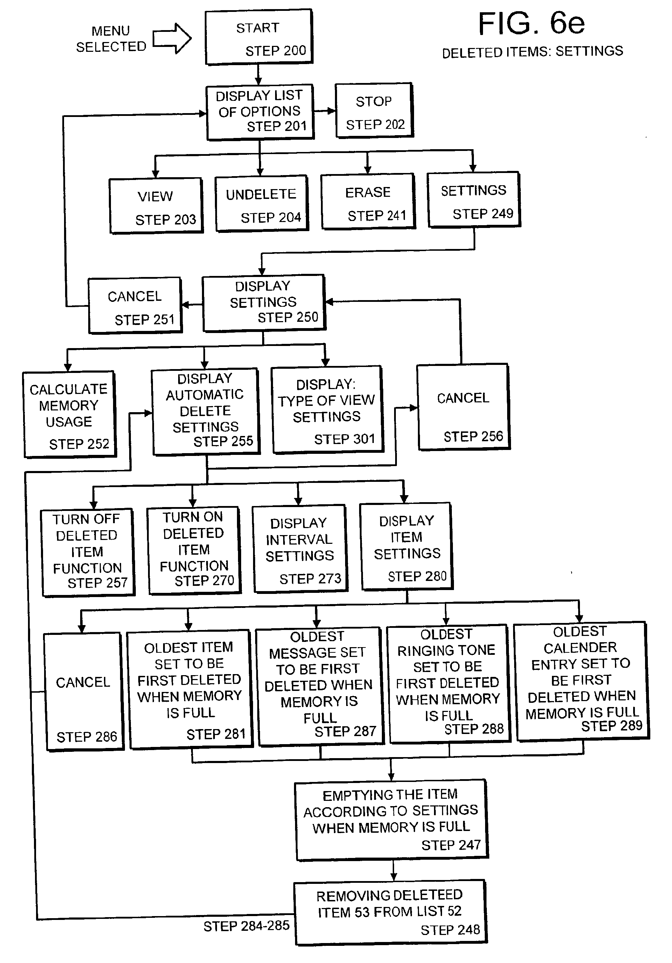

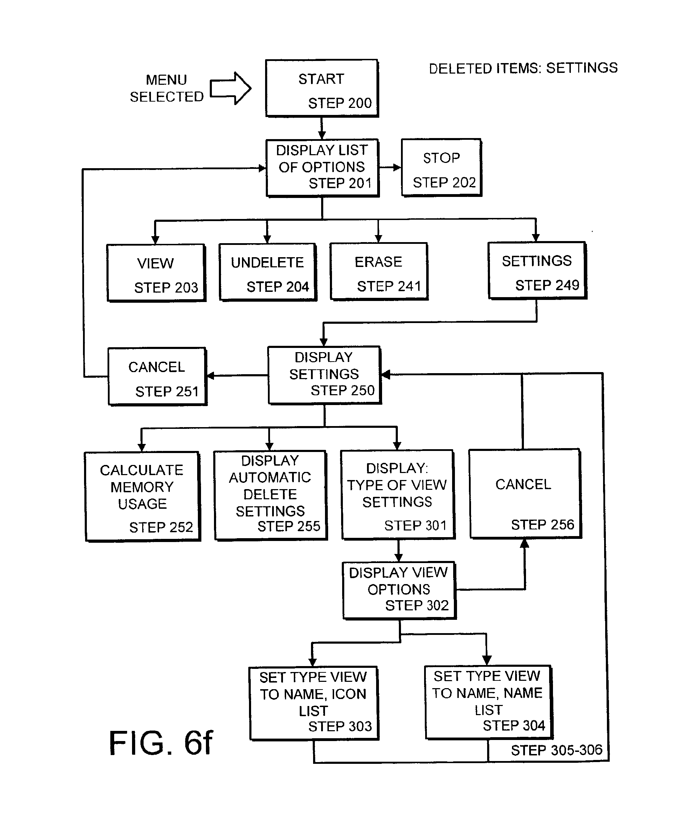

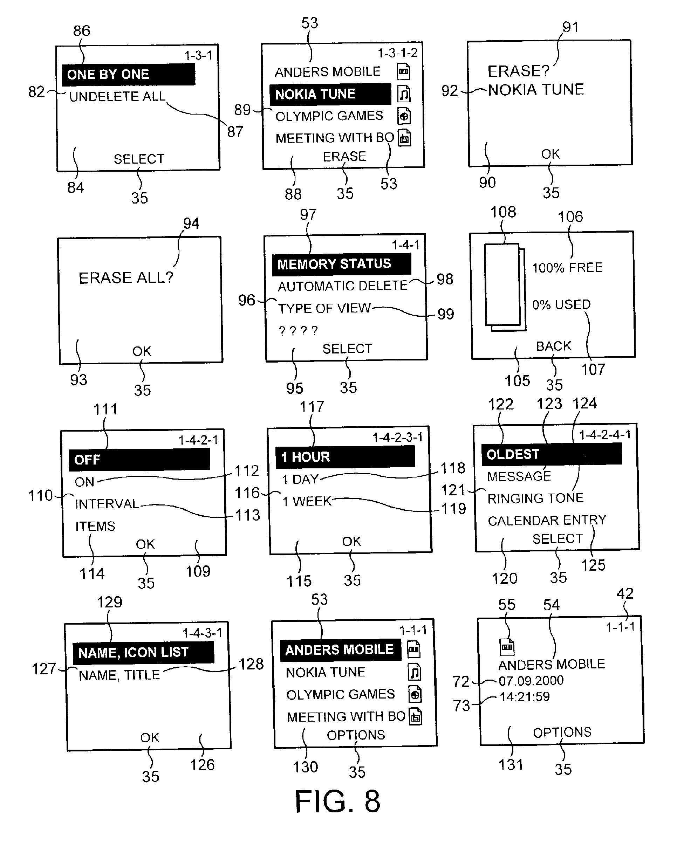

Different embodiments of the invention will be described with reference to figures 1 to 11 showing the various features and steps of handling deleted items. The recovering management terminal in a communication unit is basically included in the menu structure and will be explained in connection with the menu structure. The starting point in each embodiment is that the phone is in idle mode, which means that the phone is turned on and ready to be used for any possible operation. The idle mode display will differ from embodiment to embodiment depending on the number of soft-keys 9 or 13 that are used in each embodiment.

In the embodiments shown are examples of items that can be retrieved from the recovery management terminal like: SMS, ringing tones, phone book entries, bookmarks, settings set, calendar entries, pictures, smileys and profiles. The recovery management terminal should however not be limited to the items shown, but be used for retrieving any form of deleted items like e-mail, voice memos, voice tags, games, operator icons etc. Also user-actions, like renaming a bookmark, moving SMS from one folder to another should be stored in the recovery unit to allow undoing of these actions.

It needs to be pointed out that in most cases the deleted items are not physically deleted from the memory in the communication unit, but only the pointer or link in the application menu indicating said deleted item before being deleted. A pointer or link will instead be created in the recovery management terminal application pointing to the memory location of the deleted item. If the deleted item is recovered from the recovery management terminal the pointer or link will be re-established in the application menu where the deleted item was deleted from. There is however one exception and that is the SMS. The SMS are normally stored on the SIM card, but when they are deleted from the SIM card they are stored in the memory of the communication unit with a pointer or link to the recovery management terminal. Likewise the deleted SMS when recovered from the recovery management terminal will be physically moved to the SIM card. There could be other types of items that are moved between memories.

The displays might have another size than shown in the embodiments, but to include the different functions in the recovery terminal the displays have been adjusted in the presentation of the functions to be clearer. The user of the mobile phone uses the up/down key 10 to scroll up or down to see all the functions available in one menu.

The first described embodiment will be described in connection with the communication unit shown in figure 1, where the communication unit has one soft-key 9, also called menu selection key or NaviKey™.

An idle mode display 30 for the phone is shown in fig. 5, which includes two bars indicating the signal strength 31 and the battery level 32. Furthermore there is a time indication 33, an identification 34 of the operator to which the phone is currently connected, and a label 35 indicating the present functionality (Menu: access to the Menu structure) of the soft-key 9.

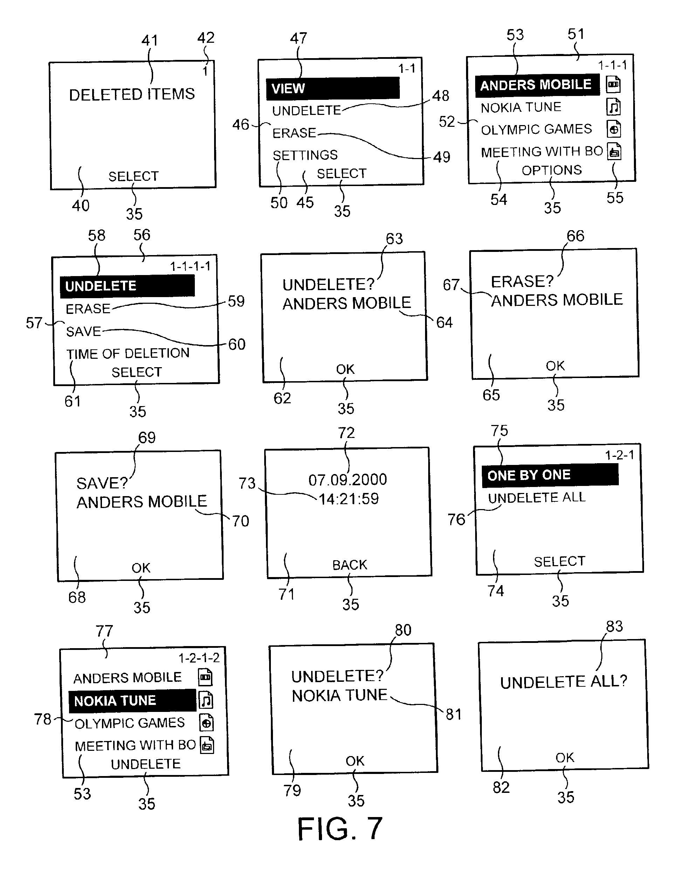

In idle mode the user can select the deleted items function by pressing the soft-key 9 "Menu" (shown in fig. 5) and scroll down with the up/down key 10 until display 1 indicates "Deleted items", like in display 40 in figure 7. This display includes a header 41 indicating the mode of the display ("Deleted items"), a menu-level indication 42 in the upper right corner and a picture 44 (not shown) displaying a picture or like that describes the mode of the display. The menu-level indication 42 indicates the specified number of the menu currently being shown and can be used to jump directly to that menu without scrolling in the menus with the up/down key 10.

By pressing the soft-key 9, "Select", once more when display 40 "Deleted items" is shown, the deleted items function is activated, step 200, and display 45 will appear, step 201, indicating a list 46 with the different options. If the cancel key 11 is pressed instead, step 202, the phone is brought back to idle mode (idle mode display 30), figure 5. In the list 46 the first option 47 "View" will be highlighted to indicate, which option is executed by pressing the soft-key 9 "Select", step 203.

The first option in display 45 is "View" 47, which is executed by pressing the soft-key 9, step 203. By pressing the up/down navigation key 10 the other possible options: "Undeleting" 48, "Erase" 49 and "Settings" 50, will be accessible and highlighted on the display instead of "View".

When "View" 47 is highlighted in display 45 the user selects it by pressing the soft-key 9 display 51 will appear, step 205. The display 51 includes a list 52 of deleted items 53. The deleted items 53 indicated in list 52 includes a name 54 of the deleted item 53 and an icon 55 indicating the type of the deleted item 53. The display 51 also includes a label 35, which indicates the present functionality (Option: How should the selected item be treated) of the soft-key 9. In the list 52 a deleted item 53 will be highlighted to indicate, which deleted item 53 will be handled by pressing the "Option" soft-key 9, step 206. If the cancel key 11 is pressed, step 207, the phone is brought back to the previous display 45. When the user presses the soft-key 9 a display 56 will appear, step 208, indicating a list 57 of the different ways that the highlighted deleted item 53 can be handled. The display 56 also includes a label 35, which indicates the present functionality (Select: The selected item will be handled according to the highlighted action) of the soft-key 9. The different ways are "Undelete" 58, "Erase" 59, "Save" 60 and "Time of deletion" 61. They are selected by scrolling up/down using the navigation key 10 and pressing the soft-key 9.

When the user selects "Undelete" 58 in display by pressing the soft-key 9 a display 62 will appear, step 209, with a header 63 "Undelete?" having the name 64 of the selected deleted item 53 below the header 63. The display 62 also includes a label 35, which indicates the present functionality (OK: Undelete the selected item) of the soft-key 9. If instead the cancel key 11 is pressed, step 210, the phone is brought back to the previous display 51. By pressing the soft-key 9 the selected item 53 will be undeleted and re-located, step 211, to the location, where it was located before it was deleted. The deleted item 53 will be removed, step 212, from the list 52 indicating the deleted items 53. After performing these actions the phone will return to display 51. Thus another selection of a deleted item 53 can be handled, step 206, or the cancel key 11 is pressed, step 207, and the phone is brought back to the display 45. If the user wants to finish the Deleted items function entirely he/she can long-press the cancel key 11 and the phone returns to idle mode (idle mode display 30).

If the user selects "Erase" 59 in display by pressing the soft-key 9 a display 65 will appear, step 213, with a header 66 "Erase?" having the name 67 of the selected deleted item 53 below the header 66. The display 65 also includes a label 35, which indicates the present functionality (OK: Delete the selected item permanently) of the soft-key 9. If instead the cancel key 11 is pressed, step 210, the phone is brought back to the previous display 51. By pressing the soft-key 9 the selected item 53 will be permanently deleted, step 214. The deleted item 53 will be removed from the list 52, step 212, indicating the deleted items 53. After performing these actions the phone will return to display 51. Thus another selection of a deleted item 53 can be handled, step 206, or the cancel key 11 is pressed, step 207, and the phone is brought back to the display 45. If the user want to finish the Deleted items function entirely he/she can long-press the cancel key 11 and the phone returns to idle mode (idle mode display 30).

If the user selects "Save" 60 in display by pressing the soft-key 9 a display 68 will appear, step 215, with a header 69 "Save?" having the name 70 of the selected deleted item 53 below the header 69. The display 68 also includes a label 35, which indicates the present functionality (OK: Save the selected item) of the soft-key 9. If instead the cancel key 11 is pressed, step 210, the phone is brought back to the previous display 51. By pressing the soft-key 9 the selected item 53 will be saved, step 216. The deleted item 53 will be removed from the list 52, step 212, indicating the deleted items 53. After performing these actions the phone will return to display 51. Thus another selection of a deleted item 53 can be handled, step 206, or the cancel key 11 is pressed, step 207, and the phone is brought back to the display 45. If the user wants to finish the Deleted items function entirely he/she can long-press the cancel key 11 and the phone returns to idle mode (idle mode display 30).

If the user selects "Time of deletion" 61 in display 46 by pressing the soft-key 9 a display 71 will appear, step 217, with a header indicating the date 72 and time 73 when the selected deleted item 53 was deleted. The display 71 also includes a label 35, which indicates the present functionality (Back: Return to display 56) of the soft-key 9. If instead the cancel key 11 is pressed, step 210, the phone is brought back to the previous display 51. By pressing the soft-key 9 the phone returns to display 56, step 218, indicating the different ways that the deleted item 53 can be handled. If the user wants to finish the Deleted items function entirely he/she can long-press the cancel key 11 and the phone returns to idle mode (idle mode display 30).

When "Undelete" 48 is highlighted in display 45 the user selects it by pressing the soft-key 9, step 204, display 74 will appear, step 229. The display 74 includes the two different options, "One by one" 75 and "Undelete all" 76. The display 74 also includes a label 35, which indicates the present functionality (Select: Selects and performs according to the highlighted option) of the soft-key 9. If instead the cancel key 11, in display 74, is pressed the phone is brought back to the previous display 45, step 244. The options 75 and 76 are selected by scrolling up/down the navigation key 10 and pressing the soft-key 9. If option "One by one" 75 is highlighted and the soft-key 9 is pressed a display 77 will appear, step 230. Display 77 includes a list 78 indicating the deleted items 53 and a label 35 indicating the present functionality (Undelete: Undelete the selected item) of the soft-key 9. If the cancel key 11, in display 77, is pressed the phone is brought back to the previous display 74, step 231. By pressing the soft-key 9 a display 79 will appear, step 232, with a header 80 "Undelete?" having the name 81 of the selected deleted item below the header 80. The display 79 also includes a label 35, which indicates the present functionality (OK: Undelete the selected item) of the soft-key 9. If instead the cancel key 11 is pressed, step 233, the phone is brought back to the previous display 77. By pressing the soft-key 9 the selected item 53 will be undeleted, step 234. The deleted item 53 will be removed from the list 78 indicating the deleted items 53, step 235. After performing this action the phone will return to display 77. Another selection of a deleted item 53 to be undeleted, step 232, can be performed or the cancel key 11 can be pressed, step 231, bringing the phone back to the display 74. Yet another pressing of the cancel key 11 brings the phone to display 45. If the user wants to exit the Deleted items function entirely he/she can long-press the cancel key 11 and the phone returns to idle mode (idle mode display 30).

If the option "Undelete all" 76 is highlighted and the soft-key 9 is pressed a display 82 will appear, step 236, with a header 83 "Undelete all?". Display 82 includes also a label 35 indicating the present functionality (OK: All delete items are undeleted) of the soft-key 9. If the cancel key 11 is pressed, step 231, the phone is brought back to the previous display 74. By pressing the soft-key 9 all deleted items 53 will be undeleted, step 237 and the list 52 of deleted items 53 will become empty, step 238 and the phone returns to idle mode (idle mode display 30), step 240. As the undeleting of deleted items 53, step 237, takes some time a display (not shown) will appear with a header "Undeleting", step 239.

When "Erase" 49 is highlighted in display 45 the user selects it by pressing the soft-key 9, step 241, display 84 will appear, step 219. The display 84 includes a list 85 of two different options, "One by one" 86 and "Erase all" 87. The display 84 also includes a label 35, which indicates the present functionality (Select: Selects and performs the action according to the highlighted option) of the soft-key 9. If instead in display 84 the cancel key 11 is pressed the phone is brought back to the previous display 45, step 245. The options 86 and 87 are selected by scrolling up/down using the navigation key 10 and pressing the soft-key 9. If option "One by one" 86 is highlighted and the soft-key 9 is pressed a display 88 will appear, step 220. Display 88 includes a list 89 indicating the deleted items 53 and a label 35 indicating the present functionality (Erase: Delete the selected item) of the soft-key 9. If in display 88 the cancel key 11 is pressed, step 221, the phone is brought back to the previous display 84. By pressing the soft-key 9 a display 90 will appear, step 222, with a header 91 "Erase?" having the name 92 of the selected deleted item 53 below the header 91. The display 90 also includes a label 35, which indicates the present functionality (OK: Delete the selected item permanently) of the soft-key 9. If instead the cancel key 11 is pressed, step 223, the phone is brought back to the previous display 88. By pressing the soft-key 9 the selected item 53 will be permanently deleted, step 224. The deleted item 53 will be removed from the list 89 indicating the deleted items 53, step 225. After performing this action the phone will return to display 88. Another selection of a deleted item 53 to be erased, step 222, can be performed or the cancel key 11 can be pressed, step 221, bringing the phone back to the display 84. Yet another pressing of the cancel key 11 brings the phone to display 45. If the user want to exit the Deleted items function entirely he/she can long-press the cancel key 11 and the phone returns to idle mode (idle mode display 30).

If the option "Erase all" 87 is highlighted and the soft-key 9 is pressed a display 93 will appear, step 226, with a header 94 "Erase all?". Display 93 also includes a label 35 indicating the present functionality (OK: All delete items are permanently deleted) of the soft-key 9. If the cancel key 11 is pressed, step 227, the phone is brought back to the previous display 84. By pressing the soft-key 9 all deleted items 53 will be permanently deleted and removed from the list 52 of deleted items 53, step 228 and the phone returns to idle mode (idle mode display 30), step 243. As the undeleting of deleted items 53, step 227, takes some time a display (not shown) will appear with a header "Erasing", step 242.

When "Settings" 50 is highlighted in display 45 the user selects it by pressing the soft-key 9, step 249, display 95 will appear, step 250. The display 95 includes a list 96 of different options, "Memory status" 97, "Automatic delete" 98 and "Type of view" 99. The display 95 includes also a label 35 indicating the present functionality (Select: Activate the selected function) of the soft-key 9. If the cancel key 11 is pressed, step 251, the phone is brought back to the previous display 45. By pressing the soft-key, when "Memory status" 97 is highlighted the phone calculates the memory usage, step 252, and the display 105 will appear, step 253. The display 105 includes two headers 106 and 107, a figure 108 and a label 35 indicating the present functionality (Back: return to the previous display) of the soft-key 9. The upper header 106 indicates "x % free", where x states the percentage of the memory that is unused. The lower header 107 indicates "y % used", where y states the percentage of the memory that is used. The portion of free and used memory is also shown graphically in figure 108. If the soft-key 9 is pressed or if the cancel key 11 is pressed, step 254, the phone is brought back to the previous display 95.

By pressing the soft-key 9, when "Automatic delete" 98 is highlighted in display 95, a display 109 will appear, step 255. The display 109 includes a list 110 indicating different automatic delete-options 111-114 and a label 35 indicating the present functionality (Select: The selected setting will be set.) of the soft-key 9. The different automatic delete-options are "Off" 111, "On" 112, "Interval" 113 and "Items" 114. If the cancel key 11 is pressed while being in display 109 the phone is brought back to the previous display 95, step 256.

If the user presses the soft-key 9 when option "Off" 111 is highlighted in display 109 the Deleted Items function is turned off, step 257 and every item that is deleted thereafter is permanently deleted and can not be recovered. A confirmation is shown in a separate display (not shown in figure), step 258, before the phone return to display 109, step 259. If the user presses the soft-key 9 when option "On" 112 is highlighted in display 109 the Recovery/ trash-can function is turned on, step 270 and every item that is deleted thereafter is gathered and added to list 52 of deleted items 53. A confirmation is shown in a separate display (not shown), step 271, before the phone return to display 109, step 272.

If the user presses the soft-key 9 when option "Interval" 113 is highlighted in display 109 a display 115 will appear, step 273. The display 115 includes a list 116 indicating the different intervals 117-119 that can be set and a label 35 indicating the present functionality (OK: Set the selected interval for permanent deletion of the deleted items 53) of the soft-key 9. The different intervals are "1 hour" 117, "1 day" 118 and "1 week" 119. By pressing the soft-key 9, when "1 hour" 117 is highlighted in display 115, the interval for emptying the list 52 with deleted items 53 will be set to one hour, step 274. Once every hour all deleted items 53 in list 52 will be permanently deleted, step 275, and the items of list 52 will be removed, step 276. After setting of interval to one hour, step 274, the phone returns to display 109, step 246. If instead the cancel key 11 in display 109 is pressed the phone is brought back to the previous display 95, step 277. If the user presses the soft-key 9, when "1 day" 118 is highlighted in display 115, the interval for emptying the list 52 with deleted items 53 will be set to one day, step 278. Once every day all deleted items 53 in list 52 will be permanently deleted, step 275, and the items of list 52 will be removed, step 276. After setting the interval to one day, step 278, the phone will return to display 109, step 246. If the user presses the soft-key 9, when "1 week" 118 is highlighted in display 115, the interval for emptying the list 52 with deleted items 53 will be set to one week, step 279. Once every day all deleted items 53 in list 52 will be permanently deleted, step 275, and the items of list 52 will be removed, step 276. The user will not be notified that the list 52 of deleted items 53 is emptied at the set interval, the emptying will be performed automatically. After setting of interval to one week, step 280, will the phone return to display 109, step 246.

If the user presses the soft-key 9 when option "Items" 114 is highlighted in display 109 a display 120 will appear, step 280. The display 120 includes a list 121 indicating the different type of items 122-125 that can be set to be deleted first if the memory is full. The display 12 also includes a label 35 indicating the present functionality (Select: Set the selected type of item to be deleted first) of the soft-key 9. The different types that specified here are "Oldest" 122, "Message" 123, "Ringing tone" 124 and "Calendar entry" 125. It could naturally be any other type of items that are handled by the Deleted items function, but in the display 120 only four types have been shown. Another option not belonging to a type, which could be possible to add in the display, are the largest items. By pressing the soft-key 9 when "Oldest" 122 is highlighted the phone will set, step 281, that the item 53 to be permanently deleted, step 247, and removed from list 52, step 248, is the oldest item 53, regardless of the type. The phone will thereafter show a confirmation display (not shown), step 284, and return to display 109, step 285. If instead the cancel key 11, in display 120, is pressed the phone is brought back to the previous display 109, step 286.

By pressing the soft-key 9 when option "Message" 123 is highlighted the phone will set, step 287, that the item 53 to be permanently deleted, step 247, and removed from list 52, step 248, is the oldest deleted message 53. The phone will thereafter show a confirmation display (not shown), step 284, and return to display 109, step 285. Or if the user presses the soft-key 9 when "Ringing tone" 124 is highlighted the phone will set, step 288, that the item 53 to be permanently deleted, step 247, and removed from list 52, step 248, is the oldest deleted ringing tone 53. The phone will thereafter show a confirmation display (not shown), step 284, and return to display 109, step 285. Or if the user presses the soft-key 9 when "Calendar entry" 125 is highlighted the phone will set, step 289, that the item 53 to be permanently deleted, step 247, and removed from list 52, step 248, is the oldest deleted calendar entry 53. The phone will thereafter show a confirmation display (not shown), step 284, and return to display 109, step 285. Another type selection of automatic delete setting can be performed or the cancel key 11 can be pressed, step 256, bringing the phone back to the display 95. Yet another pressing of the cancel key 11 brings the phone to display 45. If the user wants to exit the Deleted items function entirely he/she can long-press the cancel key 11 and the phone returns to idle mode (idle mode display 30).

If the user presses the soft-key 9, step 301, when "Type of view" 99 is highlighted in display 95, a display 126 will appear, step 302. The display 126 includes a list 127 indicating different view types 128-129, i.e. how the information is displayed in the display. Display 126 also includes a label 35 indicating the present functionality (OK: The selected view type will be set.) of the soft-key 9. The different view types are "Name, icon list" 128 and "Name, time" 129. If the cancel key 11 is pressed while being in display 126 the phone is brought back to the previous display 95, step 256. When either of view type "Name, icon list" 128 or "Name, time" 129 is highlighted pressing the soft-key 9 will set the selected view type 128 or 129 as default, step 303 or 304, and will be used thereafter. A confirmations display (not shown), step 305, will be shown and the phone returns to display 95, step 306. An example of view type "Name, icon list" 128 is shown in display 130 and an example of view type "Name, time" 129 is shown in display 131. Display 130 is a copy of display 51, while display 131 includes only one deleted item 53. To see other deleted items 53 the user can scroll up/down with the up/down navigation key 10, and the phone switches to a new display 131 for each deleted item 53. The display 131 shows a deleted item 53 having a name 54 of the deleted item 53, an icon 55 indicating the type of the deleted item 53, a label 72 indicating the deletion date and a label 73 indicating the deletion time. The display 131 also includes a label 35, which indicates the present functionality (Option: How should the selected item be treated) of the soft-key 9.

The second described embodiment will be described in connection with the communication unit shown in figure 2, where the communication unit has two soft-keys 9. It also differs from figure 1 in that the cancel key has been replaced by two call handling keys 12 and further includes a volume control key 5.

An idle mode display 30 for the phone is shown in fig. 11, which includes two bars indicating the signal strength 31 and the battery level 32. Furthermore there is a time indication 33, an identification 34 of the operator to which the phone is presently connected, and two labels 35 indicating the present functionality (Menu: access to the Menu structure; Names: access to the Phone book) of the two soft-keys 9.

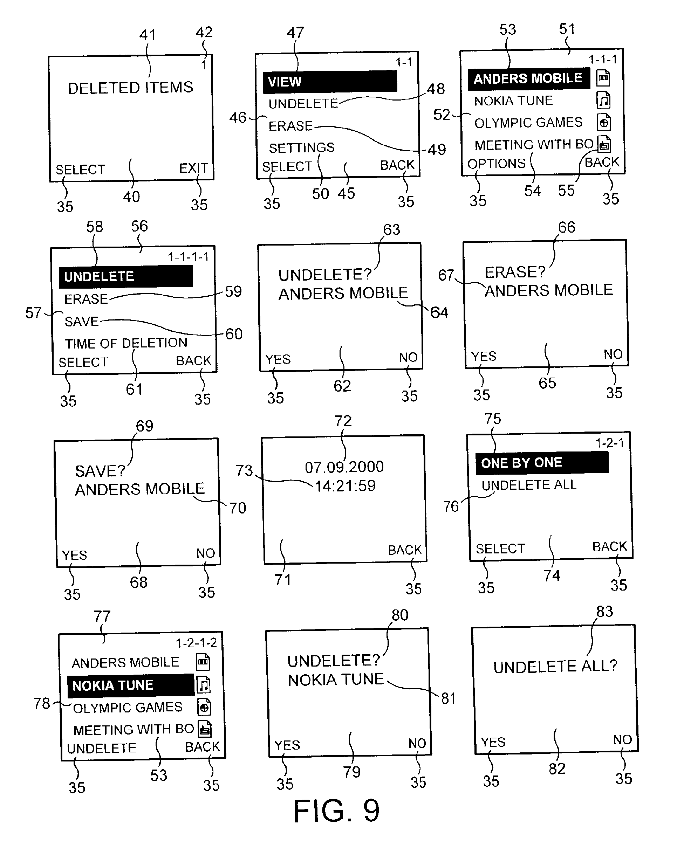

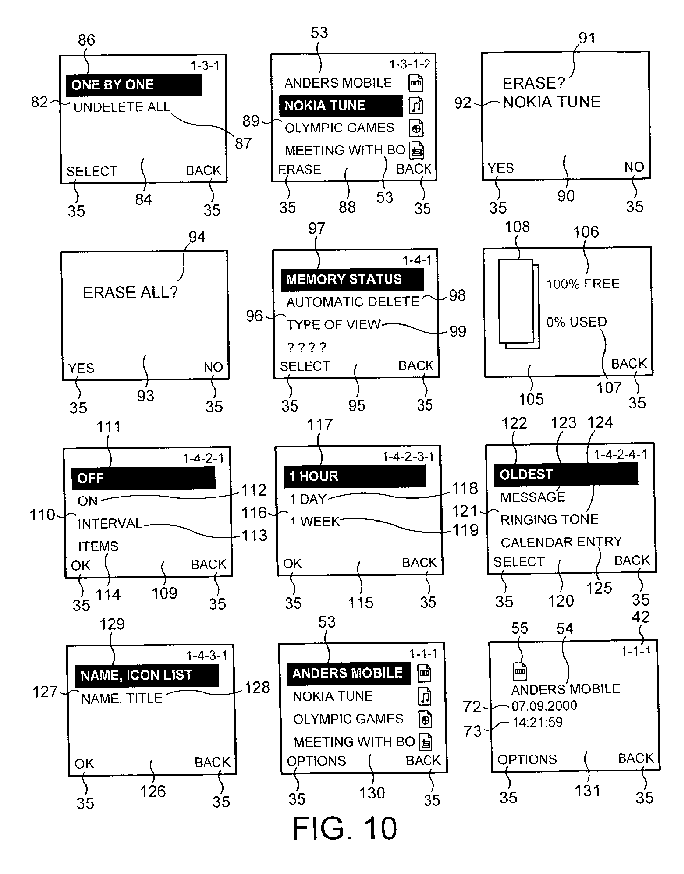

The functionality described in connection to the communication unit with one soft-key is the same as for the communication with two soft-keys, but is performed slightly different due to the difference in keys. The right soft-key 9 in the communication unit with two soft-keys replaces the functionality of the cancel key 11 in the communication unit with one soft-key. The functionality of the left soft-key is as shown is figure 9 and 10 and resembles the functionality of the single soft-key in the communication unit having one soft-key. The functionality of the menu selection soft-key 9 in the communication unit with one soft-key is taken over by the left soft-key 9 in the communication with two soft-keys 9. One exception to this is in display 71 and 105 showing time of deletion and memory status respectively, where the right soft-key 9 is used to return to the previous display for the communication with two soft-keys 9 and not the left soft-key 9 as it would be according to the above-mentioned.

The steps of the recovering management terminal as described in connection with communication unit having one soft-key 9 is therefore also valid for the communication unit having two soft-keys 9 and needs not to be repeated once more.

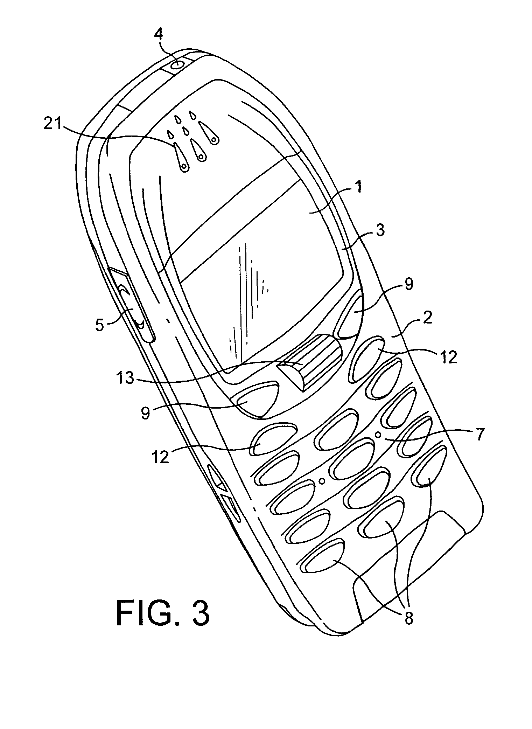

In figure 3 is shown a communication unit having three soft-keys 9, where the third soft-key is integrated in a roller key 13. The communication unit having three soft-keys 9 differs from the communication unit having two soft-keys 9 in that the roller key 13 has replaced the up/down key 10. The roller key 13 includes apart from the up/down navigation functionality, known from the up/down key 10, a menu selection functionality. This menu selection functionality can be used parallel with the menu selection function of the left soft-key 9. The user can choose any of these selection options without any difference in operation. The menu selection functionality of the roller key 13 is performed by pressing the roller key 13, and the up/down functionality is performed by rolling the roller key 13 either up or down.

The difference between communication unit having two or three soft-keys 9 is limited to one additional menu selection key 9, but otherwise having the same functionality, also the steps of the recovering management terminal described in connection with the communication unit having one soft-key 9 are valid for communication unit having three soft-keys 9 and needs not to be repeated.

The invention is not limited to the above-described examples or to the drawings showing examples of an embodiment, but can be varied within the scope of the appended claims. One possible feature of the invention could be that the items stored in a memory structure having rather limited capacity, e.g. the SIM card, can automatically be deleted from that memory structure and relocated to the memory structure of the recovery management terminal and having a link to the list of deleted items in the recovery management terminal. The deleted item from that limited memory structure could e.g. be the oldest item in the memory structure. In the embodiments shown the recovery management terminal has been shown as a separate application in the communication unit, but naturally it could be possible to have a recovery management terminal for each separate application of the communication unit.

## Claims

1. Recovery management terminal for handling deleted items in a communication unit, where said recovery management terminal includes:
• representing means for displaying the deleted items in a hierarchical memory structure including additional information about said deleted item,
• recovering means to recover said deleted item from the hierarchical memory structure of deleted items and to relocate the link to said deleted item to its original location before deletion from the memory position in which the deleted item is stored,
• recovering means for establishing a link from the memory position in which the deleted item is stored to a new location, and
• user interface means for enabling manipulation of the deleted items menu.

2. Recovery management terminal for handling deleted items in a communication unit according to claim 1 **characterised in that** the recovery management terminal can be turned off so that all deleted items are permanently deleted.

3. Recovery management terminal for handling deleted items in a communication unit according to claim 1 **characterised in that** the deleted items are SMS, ringing tones, phone book entries, calendar entries, pictures, bookmarks, user actions, settings set, renaming, phonebook editing, smileys, e-mail, voice memos, voice tags, games, operator icons picture and profiles.

4. Recovery management terminal for handling deleted items in a communication unit according to claim 1 **characterised in that** the recovery management terminal can be set to automatically delete the hierarchical memory structure when the available memory is used.

5. Recovery management terminal for handling deleted items in a communication unit according to claim 1 **characterised in that** the recovery management terminal can be set to automatically delete the hierarchical memory structure at certain interval.

6. Recovery management terminal for handling deleted items in a communication unit according to claim 1, wherein the recovery management terminal can be set to automatically delete the hierarchical memory structure when the available memory is used and **characterised in that** the hierarchical memory structure can be set to delete certain selected types of the items.

7. Recovery management terminal for handling deleted items in a communication unit according to claim 1 **characterised in that** the additional information about said deleted item includes name, item type, deletion time, deletion date and a link to the location in the communication unit/ SIM card/external device from where said deleted item was deleted.

8. Recovery management terminal for handling deleted items in a communication unit, where said recovery management terminal includes:
• representing means for displaying the deleted items in a hierarchical memory structure including additional information about said deleted item,
• recovering means to recover said deleted item from the hierarchical memory structure of deleted items and to relocate said deleted item to its original location in another memory structure in which said deleted item was located before its deletion and moved to said hierarchical memory structure of said recovery management terminal,
• recovering means for establishing a link from said deleted item to a new location, and
• user interface means for enabling manipulation of the deleted items menu.

9. Recovery management terminal for handling deleted items in a communication unit according to claim 8 **characterised in that** the recovery management terminal can be turned off so that all deleted items are permanently deleted.

10. Recovery management terminal for handling deleted items in a communication unit according to claim 8 **characterised in that** the deleted items are SMS, ringing tones, phone book entries, calendar entries, pictures, bookmarks, user actions, settings set, renaming, phonebook editing, smileys, e-mail, voice memos, voice tags, games, operator icons picture and profiles.

11. Recovery management terminal for handling deleted items in a communication unit according to claim 8 **characterised in that** the recovery management terminal can be set to automatically delete the hierarchical memory structure when the available memory is used.

12. Recovery management terminal for handling deleted items in a communication unit according to claim 8 **characterised in that** the recovery management terminal can be set to automatically delete the hierarchical memory structure at certain intervals.

13. Recovery management terminal for handling deleted items in a communication unit according to claim 8 **characterised in that** the hierarchical memory structure can be set to delete certain selected types of items.

14. Recovery management terminal for handling deleted items in a communication unit according to claim 8 **characterised in that** the additional information about said deleted item includes name, item type, deletion time, deletion date and a link to the location from where said deleted item deleted.

15. Recovery management terminal for handling deleted items in a communication unit according to claim 8 **characterised in that** said deleted items can be automatically deleted from one memory structure and relocated into the hierarchical memory structure of said recovery management terminal, when the allocated memory of said memory structure is used.

16. A method for handling deleted items being represented in a recovery management terminal in a hierarchical memory structure and including the steps of:
• representing the name of said deleted items in said memory structure, where the representation includes additional information about said deleted item,
• recover said deleted item from the hierarchical memory structure of deleted items and to relocate said deleted item to its original location before being deleted and dislocated to the hierarchical memory structure in the recovery management terminal,
• saving said deleted item to a new location, and
• user interface options for emptying said hierarchical memory structure and enabling manipulation of the deleted items menu.

17. A method for handling deleted items according to claim 16, wherein said recovery management terminal can be turned off thereby disabling said recovery management terminal.

18. A method for handling deleted items according to claim 16, wherein said deleted items handled in said recovery management terminal can be any of the following types: SMS, ringing tones, phone book entries, calendar entries, pictures, bookmarks, user actions, settings set, renaming, phonebook editing, smileys, e-mail, voice memos, voice tags, games, operator icons pictures or profiles.

19. A method for handling deleted items according to claim 16, wherein said additional information about said deleted items includes name, item type, deletion time, deletion date and a link to the location where said deleted item where deleted.

20. A method for handling deleted items according to claim 16, wherein said recovery management terminal can be set to automatically empty said memory structure at certain intervals or when the allocated memory is used according to any of the following options:
• the oldest item is deleted first from said memory structure,
• the oldest message is deleted first from said memory structure,
• the oldest ringing tone is deleted first from said memory structure,
• the oldest calendar entry is deleted first from said memory structure or,
• any other specified type is deleted first of deleted items from the said memory structure.
